# EUROPEAN PATENT SPECIFICATION

(11) **EP 1 973 291 B1**
(45) Date of publication and mention of the grant of the patent: **06.11.2013**
(21) Application number: 07251203.1
(22) Date of filing: 21.03.2007
(51) Int. Cl.: H04W 12/02, H04L 29/06

(54) **Method for transmitting a message having a non-encoded and an encoded portion in a wireless system**
Verfahren zur Übertragung einer Nachricht bestehend aus einem unverschlüsselten und einem verschlüsselten Teil in einem drahtlosen System
Procédé pour transmettre un message comprenant une partie codée et une partie non codée dans un système de communication sans fil

(43) Date of publication of application: 24.09.2008
(73) Proprietor: Alcatel Lucent, 75007 Paris (FR)
(72) Inventor: Palat, Sudeep Kumar, Swindon Wiltshire SN5 6EE (GB); Casati, Alessio, Swindon Wiltshire SN5 5BG (GB); Tatesh, Said, Swindon Wiltshire SN5 5BW (GB); Faniuolo, Antonella, Swindon Wiltshire SN25 2AU (GB)
(74) Representative: Wetzel, Emmanuelle

(56) References cited:
- US-A1- 2002 110 095
- HOLMA AND A TOSKALA H: "WCDMA for UMTS - Chapter 7 Radio Interface Protocols" WCDMA FOR UMTS: RADIO ACCESS FOR THIRD GENERATION MOBILE COMMUNICATIONS, 2000, pages 121-142, XP002266796
- "Universal Mobile Telecommunications System (UMTS); Radio Link Control (RLC) protocol specification (3GPP TS 25.322 version 7.2.0 Release 7)" ETSI STANDARDS, EUROPEAN TELECOMMUNICATIONS STANDARDS INSTITUTE, SOPHIA-ANTIPO, FR, vol. 3-R2, no. V720, September 2006 (2006-09), pages 1-87, XP014035578 ISSN: 0000-0001
- "Universal Mobile Telecommunications System (UMTS); UTRAN Iu interface Radio Access Network Application Part (RANAP) signalling (3GPP TS 25.413 version 7.4.0 Release 7)" ETSI STANDARDS, EUROPEAN TELECOMMUNICATIONS STANDARDS INSTITUTE, SOPHIA-ANTIPO, FR, no. V740, December 2006 (2006-12), pages 1-55, XP014036353 ISSN: 0000-0001

## Description

### BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile, may then access the system and, thus, other interconnected telecommunications systems, via one or more of the base stations. Typically, a mobile device (also known as user equipment (UE)) maintains communications with the system as the mobile device passes through an area by communicating with one and then another base station. The mobile device may communicate with the closest base station, the base station with the strongest signal, the base station with a capacity sufficient to accept communications, *etc*. Further, each base station may be in communication with a large number of mobile devices.

Generally, in a cellular communications system, signaling messages are encrypted, and therefore must be decrypted by the receiving party. For the receiving party to be able to decrypt the encrypted signaling message, it must "know" the encryption scheme used by the sender. Thus, when a connection is first established, information regarding the encryption scheme is exchanged using unencrypted messages. For example, In Universal Mobile Telephone System (UMTS), encryption is started (or reconfigured) using an explicit Security Mode Command. The security control messages must be carried unencrypted since they provide the ciphering information that is needed to cipher the messages that follow. The use of explicit signaling messages adds to the delay in the establishment of the procedures. This is perhaps most significant when there is a ciphering reconfiguration. Additionally, for a change in network node performing the ciphering (this could for example happen when the UE moves to the coverage area of another node in a mobile network) could also involve a change in security algorithm and will require configuration with the new security context before the change in node can happen, leading to additional signaling messages and complications.

Universal Mobile Telephony Systems (UMTS) and Global System for Mobile Communications (GSM) typically invoke a security mode command procedure first and only on completion of the procedure, send the next signaling message. Radio Link Controller (RLC) packets (Packet Data Units (PDUs)) containing the security mode command are not ciphered. RLC PDU contained in the next signaling message is ciphered. In a typical prior art system, the ciphering request message is delivered first, and ciphered messages arc delivered in subsequent RLC PDUs.

Jiang and Sun (U.S. Patent Application Publication No. 2002/0110095) describe transmitting packet data units that include encrypted data and an unencrypted sequence number. The unencrypted sequence number is used by the existing encryption function in the receiver to decrypt the encrypted data in the message.

### SUMMARY OF THE INVENTION

Methods and apparatuses according to the present invention are set out in the independent claims, to which the reader is now referred. Preferred features are laid out in the dependent claims.

In one aspect of the instant invention, a method is provided for controlling encoded transmissions. The method comprises transmitting a message having a first non-encoded portion and a second encoded portion, said first non-encoded portion having information contained therein regarding decoding the second encoded portion.

In another aspect of the instant invention, a method is provided for controllably receiving encoded messages. The method comprises receiving a first message and determining if a portion of the first message contains unencoded information. The unencoded information is used to decode an encoded portion of the first message.

### BRIEF DESCRIPTION OF THE DRAWINGS

The invention may be understood by reference to the following description taken in conjunction with the accompanying drawings, in which like reference numerals identify like elements, and in which:
Figure 1 is a stylistic block diagram of a communications system, in accordance with one embodiment of the present invention;
Figure 2 depicts a block diagram of one embodiment of a base station and a mobile device used in the communications system of Figure 1;
Figure 3 depicts a stylized flow diagram illustrating the exchange of messages between a UE, a UTRAN and a CN in a conventional wireless system;
Figure 4 depicts a stylized flow diagram illustrating the exchange of messages between a UE, a UTRAN and a CN in a system that is capable of combining the Security Mode Command with the subsequent RRC or NAS signalling message;
Figure 5 depicts a stylistic block diagram of a transmitter within the Radio Link Controller (RLC);
Figure 6 depicts a stylistic block diagram ofa receiver within the RLC;
Figure 7 depicts a stylistic block diagram of a first embodiment of a transmitter within the RLC, which describes the structure and generation of a PDU according to one aspect of the instant invention;
Figure 8 depicts a stylistic block diagram of a second embodiment of a transmitter within the RLC, which describes the structure and generation of a PDU according to another aspect of the instant invention;
Figure 9 depicts one embodiment of a structure that may be employed in an RLC PDU;
Figure 10 depicts a stylized flow chart representation of a control methodology that may be implemented in a receiver within the RLC to process the RLC PDU generated by the transmitter of Figures 7 and 8;
Figure 11 depicts a stylistic block diagram of a third embodiment of a transmitter within the RLC, which describes the structure and generation of a PDU according to another aspect of the instant invention; and
Figure 12 depicts a stylized flow chart representation of a control methodology that may be implemented in a receiver within the RLC to process the RLC PDU generated by the transmitter of Figure 11.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

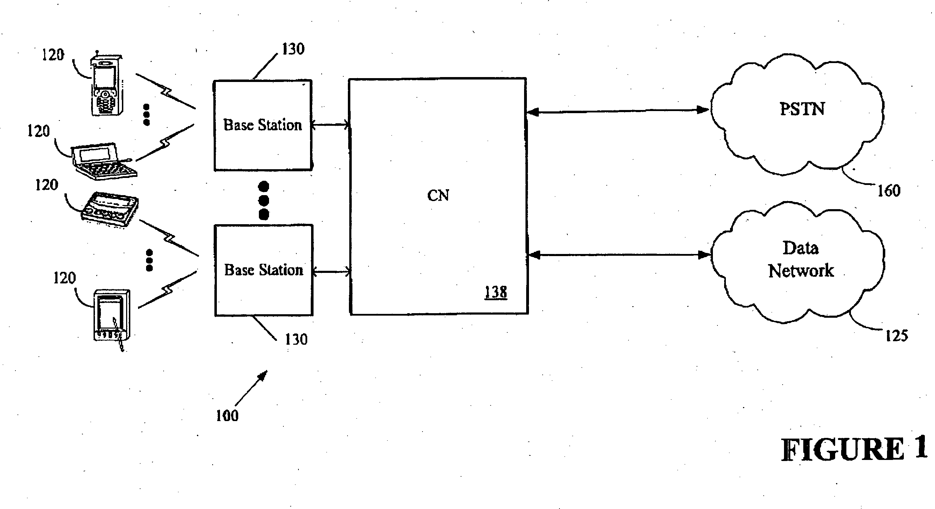

Turning now to the drawings, and specifically referring to Figure 1, a communications system 100 is illustrated, in accordance with one embodiment of the present invention. For illustrative purposes, the communications system 100 of Figure 1 is a wireless telephone system that employs a broadband data standard commonly known as LTE (Long Term Evolution, although it should be understood that the present invention may be applicable to other systems that support data and/or voice communication. The communications system 100 allows one or more mobile devices or UEs 120 to communicate with a data network 125, such as the Internet, and/or a public telephone system (PSTN) 160 through one or more base stations or UMTS Terrestrial Radio Access Networks (UTRANs) 130 and additional circuitry 138, such as a Core Network (CN). The mobile device 120 may take the form of any of a variety of devices, including cellular phones, personal digital assistants (PDAs), laptop computers, digital pagers, wireless cards, and any other device capable of accessing the data network 125 and/or the PSTN 160 through the base station 130.

Thus, those skilled in the art will appreciate that the communications system 100 enables the mobile devices 120 to communicate with the data network 125 and/or the PSTN 160. It should be understood, however, that the configuration of the communications system 100 of Figure 1 is exemplary in nature, and that fewer or additional components may be employed in other embodiments of the communications system 100 without departing from the scope of the instant invention.

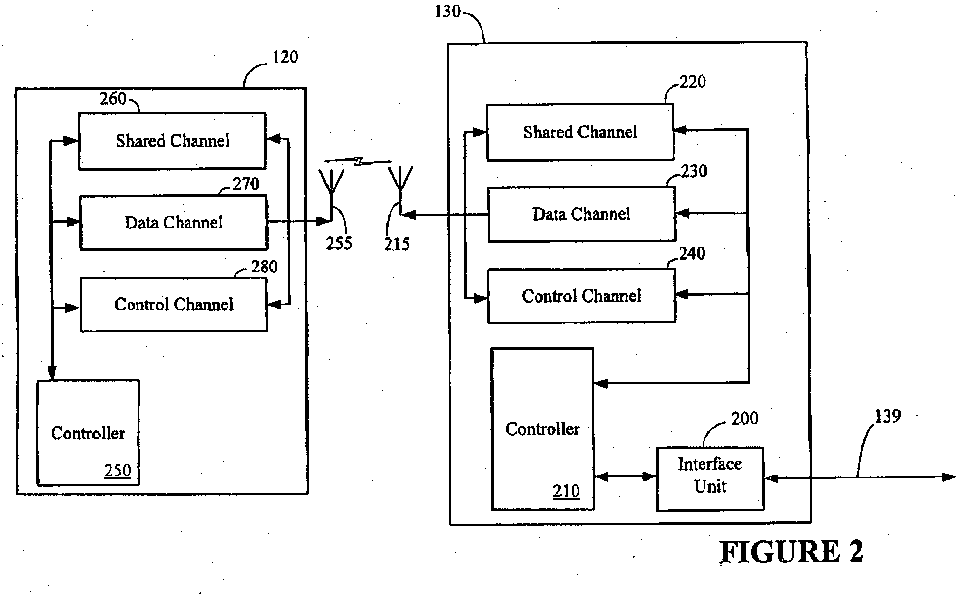

Referring now to Figure 2, a block diagram of one embodiment of a functional structure associated with an exemplary base station 130 and mobile device 120 is shown. The base station 130 includes an interface unit 200, a controller 210, an antenna 215 and a plurality of channels: such as a shared channel 220, a data channel 230, and a control channel 240. The interface unit 200, in the illustrated embodiment, controls the flow of information between the base station 130 and upstream circuitry, such as the CN 138 (shown in Figure 1). The controller 210 generally operates to control both the transmission and reception of data and control signals over the antenna 215 and the plurality of channels 220, 230, 240 and to communicate at least portions of the received information to the RNC 138 via the interface unit 200.

The mobile device 120 shares certain functional attributes with the base station 130. For example, the mobile device 120 includes a controller 250, an antenna 255 and a plurality of channels: such as a shared channel 260, a data channel 270, and a control channel 280. The controller 250 generally operates to control both the transmission and reception of data and control signals over the antenna 255 and the plurality of channels 260, 270, 280.

Normally, the channels 260, 270, 280 in the mobile device 120 communicate with the corresponding channels 220, 230, 240 in the base station 130 and may consist of both uplink and downlink channels. Under the operation of the controllers 210, 250, the channels 220, 260; 230, 270; 240, 280 are used to effect a controlled scheduling of communications from the mobile device 120 to the base station 130.

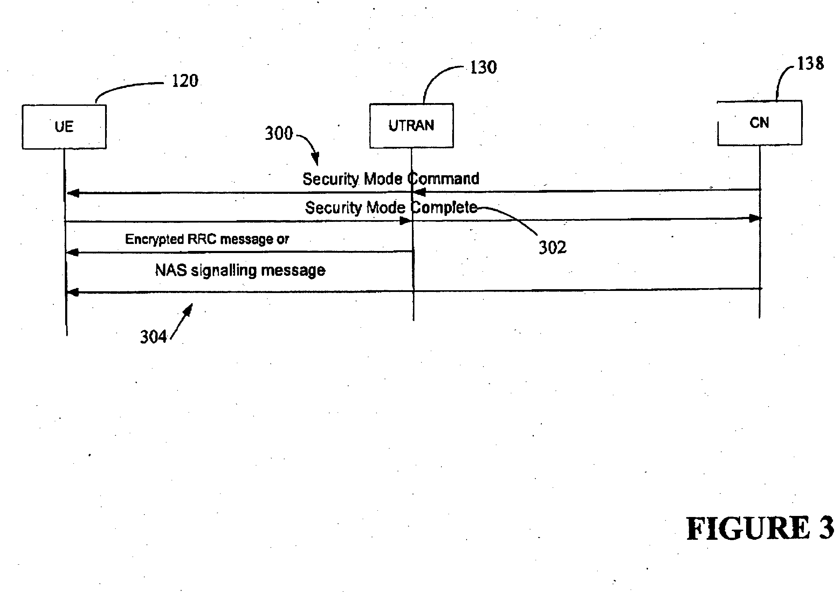

Turning now to Figure 3, a stylized flow diagram illustrating the exchange of messages between the UE 120, UTRAN 130 and CN 138 in a conventional system is shown. To ensure start of a security association that involves encryption and integrity protection by the UTRAN 130, the CN 138 first invokes a Security Mode Procedure to the UTRAN 130. The UTRAN 130 initialises its security engine and forwards a Security Mode Command 300 to the UE 120. The UE 120 completes initialisation of its security context and acknowledges with a Security Mode Complete message 302 passed to UTRAN 130 and then on to CN 138. Only following this can the UTRAN 130 or CN 138 send further Radio Resource Controller (RRC) or Non Access Stratum (NAS) messages 304. These messages will be sent ciphered by the UTRAN 130 to the UE 120.

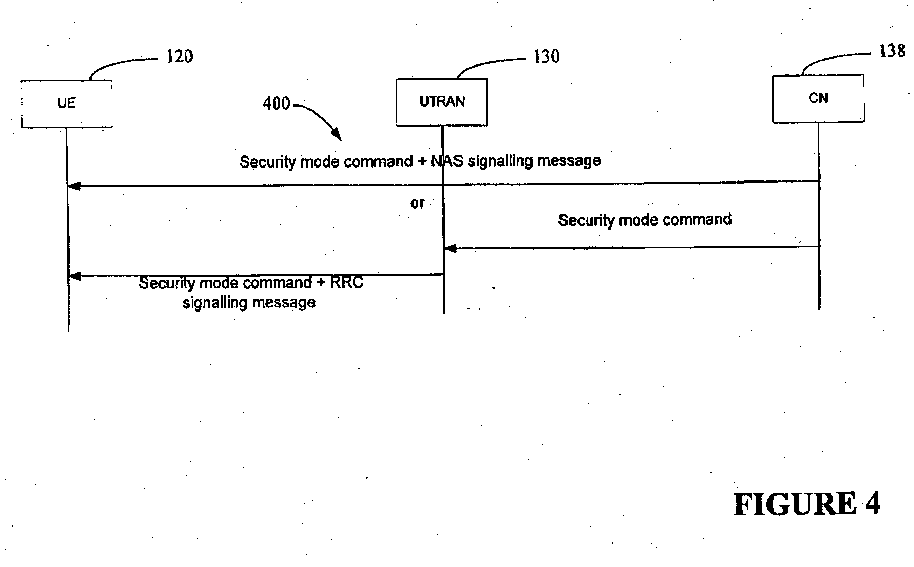

Turning now to Figure 4, a stylized flow diagram illustrating the exchange of messages between the UE 120, UTRAN 130 and CN 138 in a system that is capable of combining the Security Mode Command with the subsequent RRC or NAS signalling message is shown. This combination of signals 400 will speed up the procedure since the system does not have to wait for the completion of the Security Mode Command before sending the subsequent RRC or NAS signalling message.

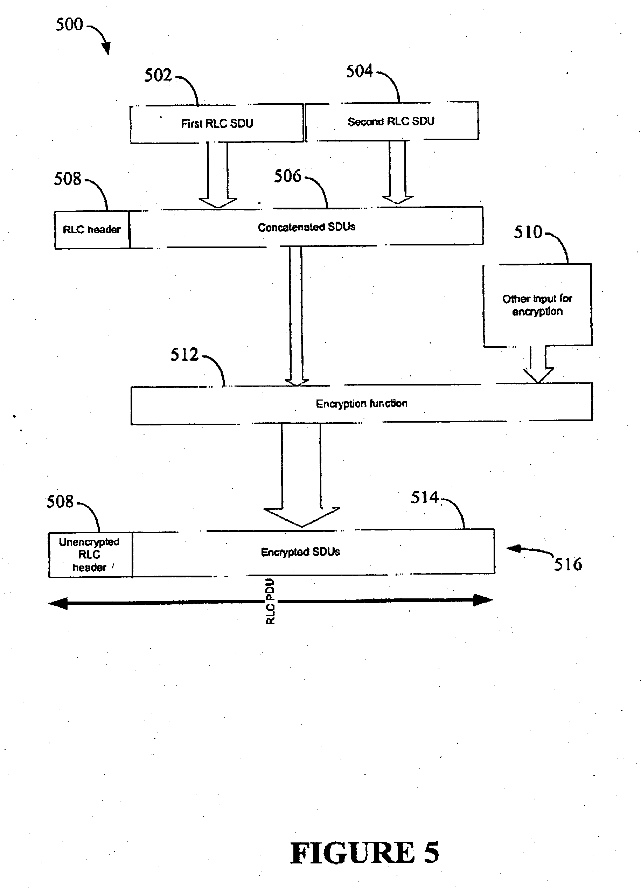

Figure 5 depicts a stylistic block diagram of a transmitter 500 within the Radio Link Controller (RLC), which describes the structure and generation of a Packet Data Unit (PDU). In a UMTS system, encryption is performed by the RLC layer. A First RLC Service Data Unit (SDU) 502 is combined with a Second RLC SDU 504 to form concatenated SDUs 506. An RLC header 508, which is not encrypted, is appended to the concatenated SDUs 506. The "other input for encryption" 510 is configured by the higher layers and includes, parameters such as security keys, and is used to develop an encryption function 512 that is applied to the concatenated SDUs 506 to form encrypted SDUs 514. Those skilled in the art will appreciate that tlie RLC header 508 remains unencrypted and is appended to the encrypted SDUs 514 to form an RLC PDU 516.

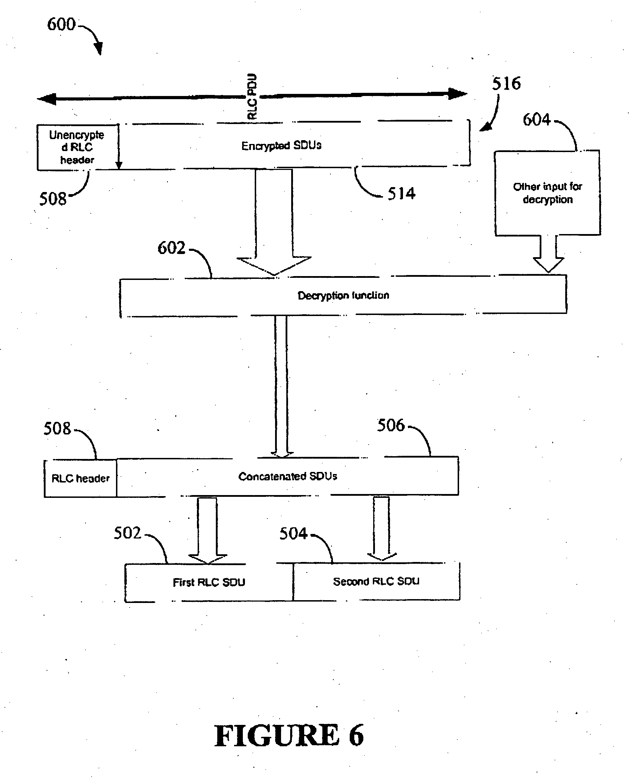

At the receiving end, the RLC has to perform the reverse function, as shown in Figure 6. A receiver 600 accepts the RLC PDU 516 aud applies a decryption function 602 to the encrypted SDUs 514 to reproduce the concatenated SDUs 506, and subsequently, the first and second RLC SDUs 502, 504. The decryption function 602 should be provided with the "other inputs for decryption" 604, which includes amongst others, Security keys. The security keys at the receiving end are derived from information contained in the RRC security mode command and some internal parameters stored in the UE 120.

In the system described in conjunction with Figures 5 and 6, the RLC encryption function encrypts the entire RLC packet except for the header. Further, the "other inputs for encryption" must be initialised before the RLC receiver 600 can decrypt the RLC PDU and generate the SDUs. Hence the RLC PDU is not decrypted until the RRC security mode command is received and processed.

Those skilled in the art will appreciate that the operation of the system described above in Figures 5 and 6 may be improved by providing the RLC with the RRC security mode command and the subsequent signalling message, and by making the RLC "aware" of the special handling requirement of the RRC security mode command. The RLC at the transmitting end may not encrypt that RRC Security mode command SDU, but still ciphers the subsequent signalling message. There arc several implementation options on how this could be done. Two possibilities are provided below, but other implementations are also possible.

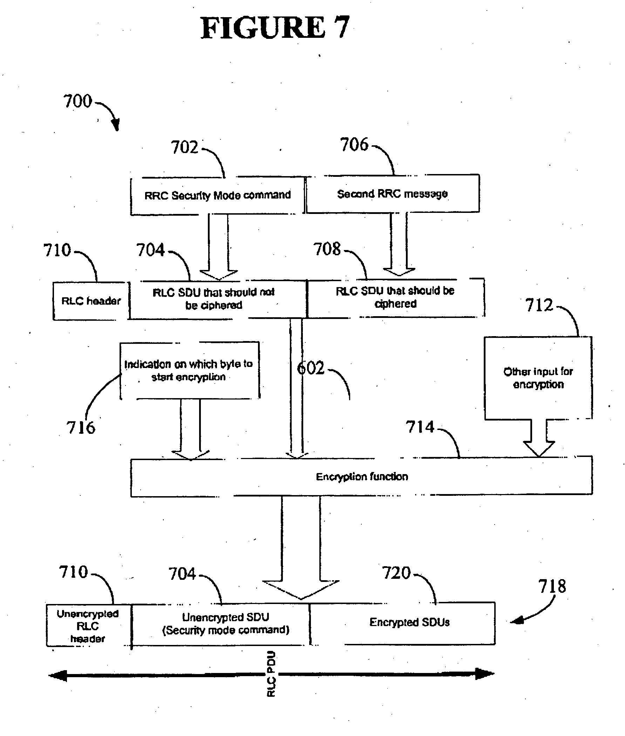

In a first embodiment, Figure 7 depicts a stylistic block diagram of a transmitter 700 within the Radio Link Controller (RLC), which describes the structure and generation of a Packet Data Unit (PDU) according to one aspect of the instant invention. An RRC Security Mode Command 702 is loaded into a First RLC SDU 704 that should not be ciphered. A Second RRC message 706 is loaded into a Second RLC SDU 708 that should be ciphered. An RLC header 710, which is not intended to be encrypted, is appended to First and Second RLC SDUs 704, 708. The "other input for encryption" 712 is configured by the higher layers and includes, parameters such as security keys, and is used to develop an encryption function 714 that is applied to the Second RLC SDU 708. The encryption function 714 is fed with the First and Second RLC SDUs 704, 708 and RLC header 710 with a pointer 716 identifying the byte from which the encryption should start. That is, the pointer 716 identifies where the second RLC SDU 708 begins. Thus, the result of the encryption function 714 is an RLC PDU 718 that is comprised of three parts: 1) the unencrypted RLC header 710, the unencrypted RLC SDU 704 (Security Mode Common), and an encrypted SDU 720.

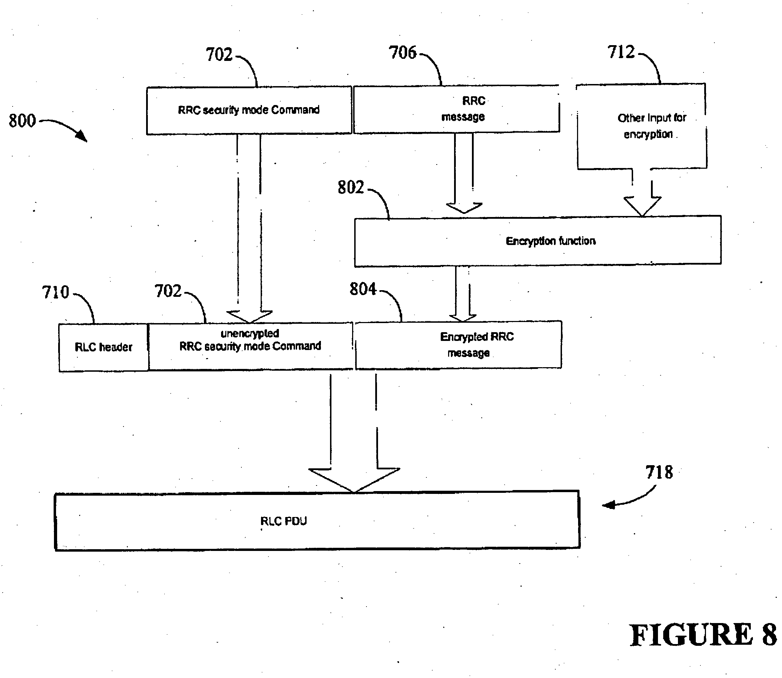

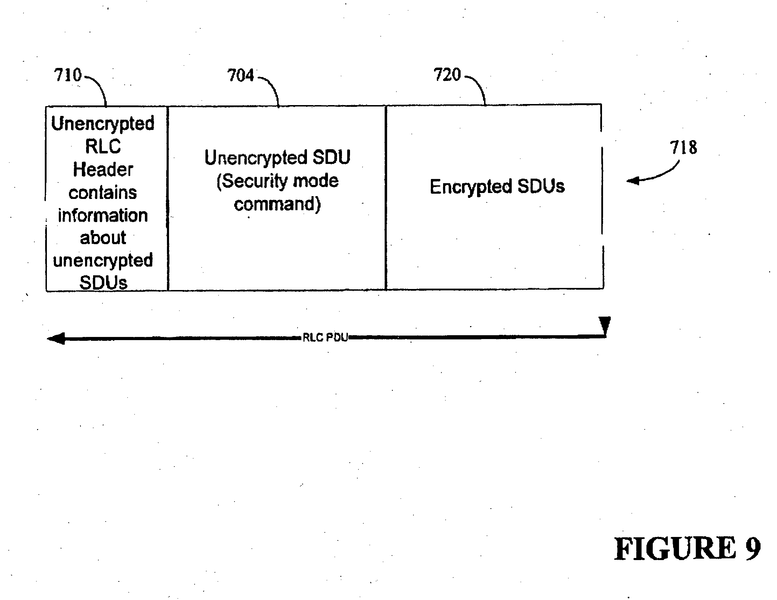

In a second embodiment, Figure 8 depicts a stylistic block diagram of a transmitter 800 within the Radio Link Controller (RLC), which describes the structure and generation of a Packet Data Unit (PDU) according to another aspect of the instant invention. In this alternative embodiment, another option for encryption is shown in which an encryption function 802 is only provided with the RRC messages 706 that should be encrypted, and the complete RLC PDU 718 is put together afterwards. Both of the embodiments of the transmitters 700, 800 result in substantially identical RLC PDUs 718. As shown in Figure 9, the RLC PDU 718 has information in the RLC header 710 that the PDU contains unencrypted SDUs that need to be processed first at the receiving end.

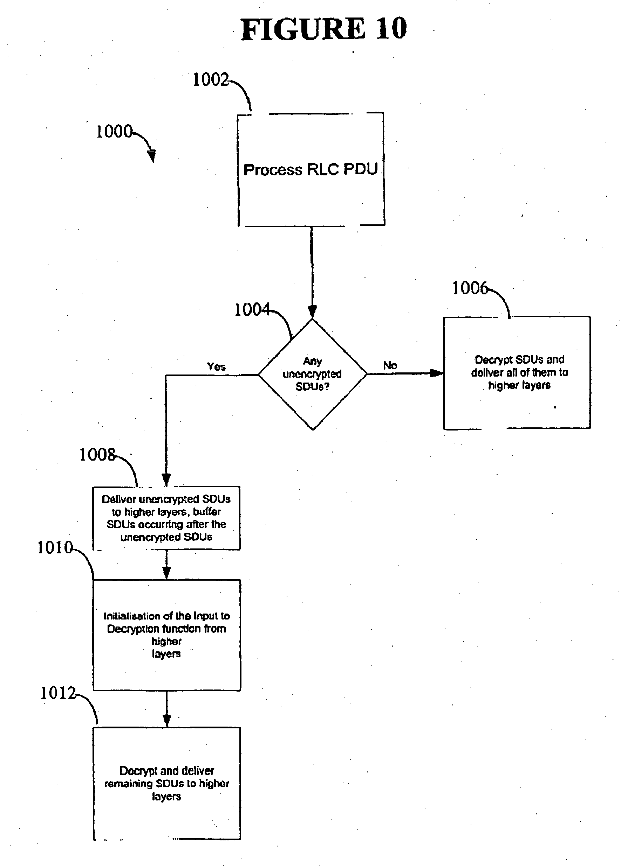

Turning to Figure 10, one embodiment of a flowchart representation of a control routine 1000 that may be implemented by a receiver at the receiving end to process the RLC PDU 718 is shown. The process begins at block 1002 with control being transferred to decision block 1004. At block 1004, the control routine 1000 determines if the RLC PDU 718 contains any unencrypted SDUs. The RLC decryption function is provided with the decryption input so that it can decrypt. The "other input for decryption" needs input from the RRC security mode command, which is a part of the RLC PDU 718 itself. Thus, if the decision block 1004, determines that unencrypted SDUs are present, then control transfers to block 1008 where they are processed and forwarded to the higher layers while the RLC PDU 718 itself is buffered in the RLC layer at the receiver. Once the higher layer has processed the RRC Security Mode Command, it initialises the "other input for decryption" at block 1010. The RLC layer can then process the RLC PDU 718 again and decrypt the encrypted RLC SDUs 718 at block 1012 and send the remaining RLC SDUs 718 to the higher layers.

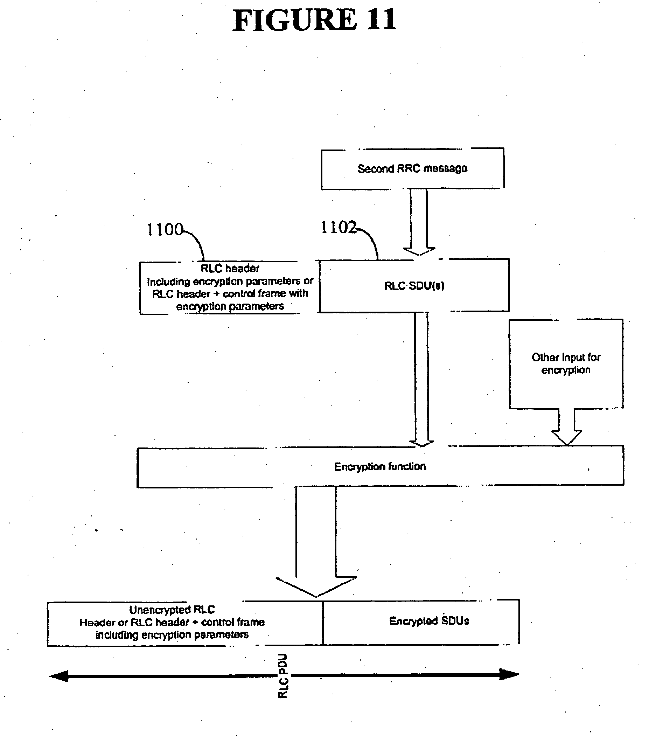

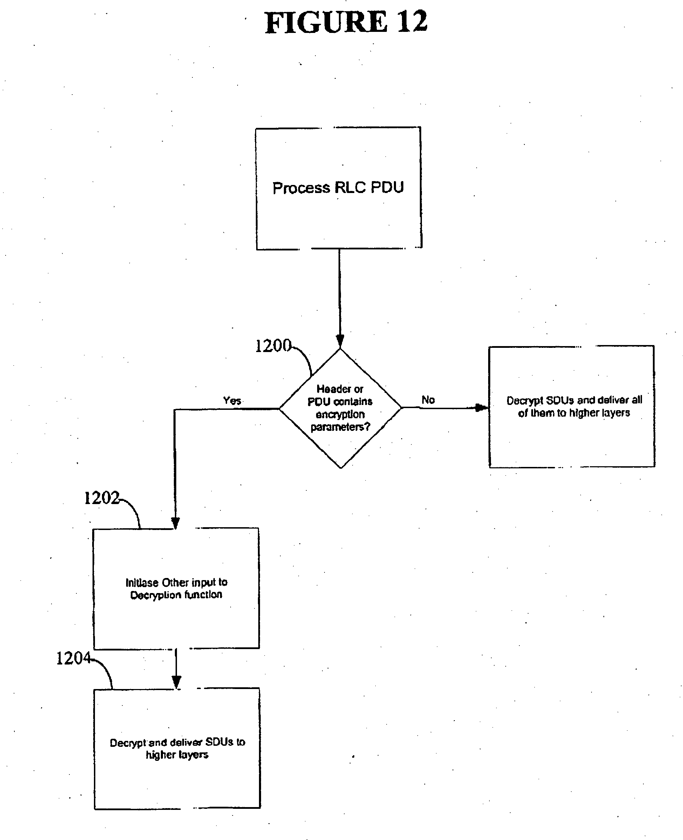

In an alternative embodment shown in Figures 11 and 12, an RLC header 1100 or an RLC "control frame" may be used to carry the security parameters carried in the RRC security Mode command. If an RLC control frame is used, then the control frame is inserted between the RLC header 1100 and the RLC SDU 1102. Thus, no explicit RRC Security Mode Command is issued. This allows all of the RLC SDUs to be encrypted (but not the RLC header or the control frame if that possibility is used) as in the RLC of today.

Processing at the receiving end is also simpler. At decision block 1200, the RLC will process the header 1100 to determine if the header or PDU contains encryption parameters, including the security parameters. If security parameters are included in the RLC header 1100, the RLC at block 1202 reinitialises the "other input for decryption" within the RLC layer before decrypting the RLC SDUs at block 1204.

Those skilled in the art will appreciate that the various system layers, routines, or modules illustrated in the various embodiments herein may be executable control units (such as the controllers 210, 250 (see Figure 2)). The controllers 210, 250 may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the controllers 210, 250 cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope of the invention. Accordingly, the protection sought herein is as set forth in the claims below.

## Claims

1. A UMTS System, adapted for the exchange of messages between a User Equipment UE (120), UTRAN (130) and Core Network (138), said messages including a security mode command and a Radio Resource Control RRC or Non Access Stratum NAS signaling messages, said exchange of said messages comprising combining in a RLC PDU an unencrypted RLC header, an unencrypted RRC security mode command with a subsequent encrypted RRC signaling message.

2. A UMTS System, adapted for the exchange of messages between a User Equipment UE (120), UTRAN (130) and Core Network (138), said messages including a security mode command and a Radio Resource Control RRC or Non Access Stratum NAS signaling messages, said exchange of said messages comprising combining in a RLC PDU an unencrypted RLC header, a unencrypted RLC control frame carrying security parameters carried in a RRC security mode command with a subsequent encrypted RRC signaling message.

3. A UMTS System according to claim 1 or 2, for a System using Long Term Evolution LTE standard.

4. A UMTS Terrestrial Radio Access Network UTRAN (130), adapted for the exchange of messages with a User Equipment UE (120) in a wireless communication system, said messages including a security mode command and a Radio Resource Control RRC or Non Access Stratum NAS signaling messages, said exchange of said messages comprising combining in a RLC PDU an unencrypted RLC header, an unencrypted RRC security mode command with a subsequent encrypted RRC signaling message.

5. A UMTS Terrestrial Radio Access Network UTRAN (130), adapted for the exchange of messages with a User Equipment UE (120) in a wireless communication system, said messages including a security mode command and a Radio Resource Control RRC or Non Access Stratum NAS signaling messages, said exchange of said messages comprising combining in a RLC PDU an unencrypted RLC header, a unencrypted RLC control frame carrying security parameters carried in the RRC security mode command with a subsequent encrypted RRC signaling message.

6. The UTRAN of claim 4 or 5, for a system using Long Term Evolution LTE standard.

7. A method for the exchange of messages in a UMTS System according to claim 1 or 3 or in an UTRAN equipment according to claim 4 or 6, comprising the steps of, at a transmitter within RLC:
- providing the RLC with the RRC security mode command and the subsequent signalling message,
- the RLC not encrypting the RRC Security mode command, but still ciphering the subsequent signalling message,
- combining in a RLC PDU an unencrypted RLC header, an unencrypted RRC security mode command with a subsequent encrypted RRC signaling message.

8. A method for the exchange of messages in a UMTS System according to claim 2 or 3 or in an UTRAN equipment according to claim 5 or 6, comprising the steps of, at a transmitter within RLC:
- providing the RLC with the RRC security mode command and the subsequent signalling message,
- the RLC not encrypting the RRC Security mode command, but still ciphering the subsequent signalling message,
- combining in a RLC PDU an unencrypted RLC header, a unencrypted RLC control frame carrying security parameters carried in a RRC security mode command with a subsequent encrypted RRC signaling message.

9. A method according to claim 7 or 8, comprising a step of:
- feeding an encryption function (714) that is applied to a Second RLC SDU (708) with a First and Second RLC SDUs (704, 708) and RLC header (710) with a pointer (716) identifying the byte from which the encryption should start.

10. A method according to claim 7 or 8, comprising a step of:
- only providing an encryption function (714) with the RRC message that should be encrypted and putting the complete RLC PDU together afterwards.

11. A method according to any of claims 7 to 10, comprising a step of:
- providing, in the RLC header, information that the RLC PDU contains unencrypted SDUs that need to be processed first at the receiving end.

## Patentansprüche

1. UMTS-System, ausgelegt für den Austausch von Nachrichten zwischen einem Benutzerendgerät UE (120), UTRAN (130) und Kernnetzwerk (138), wobei die besagten Nachrichten Signalisierungsnachrichten für einen Sicherheitsmodusbefehl und eine Funkressourcensteuerung RRC oder eine zugangsgesperrte Schicht NAS enthalten, wobei der besagte Austausch der besagten Nachrichten das Kombinieren eines unverschlüsselten RLC-Headers, eines unverschlüsselten RRC-Sicherheitsmodusbefehls mit einer nachfolgenden verschlüsselten RRC-Signalisierungsnachricht in einer RLC PDU umfasst.

2. UMTS-System, ausgelegt für den Austausch von Nachrichten zwischen einem Benutzerendgerät (120), UTRAN (130) und Kernnetzwerk (138), wobei die besagten Nachrichten Signalisierungsnachrichten für einen Sicherheitsmodusbefehl und eine Funkressourcensteuerung RRC oder eine zugangsgesperrte Schicht NAS enthalten, wobei der besagte Austausch der besagten Nachrichten das Kombinieren eines unverschlüsselten RLC-Headers, eines unverschlüsselten RLC-Steuerrahmens, welcher in einem RRC-Sicherheitsmodusbefehl transportierte Sicherheitsparameter transportiert, mit einer nachfolgenden verschlüsselten RRC-Signalisierungsnachricht in einer RLC PDU umfasst.

3. UMTS-System nach Anspruch 1 oder 2, für ein System, welches den Long Term Evolution bzw. LTE-Standard verwendet.

4. Terrestrisches UMTS-Funkzugangsnetzwerk UTRAN (130), ausgelegt für den Austausch von Nachrichten mit einem Benutzerendgerät UE (120) in einem drahtlosen Kommunikationssystem, wobei die besagten Nachrichten Signalisierungsnachrichten für einen Sicherheitsmodusbefehl und eine Funkressourcensteuerung RRC oder eine zugangsgesperrte Schicht NAS enthalten, wobei der besagte Austausch der besagten Nachrichten das Kombinieren eines unverschlüsselten RLC-Headers, eines unverschlüsselten RRC-Sicherheitsmodusbefehls mit einer nachfolgenden verschlüsselten RRC-Signalisierungsnachricht in einer RLC PDU umfasst.

5. Terrestrisches UMTS-Funkzugangsnetzwerk UTRAN (130), ausgelegt für den Austausch von Nachrichten mit einem Benutzerendgerät UE (120) in einem drahtlosen Kommunikationssystem, wobei die besagten Nachrichten Signalisierungsnachrichten für einen Sicherheitsmodusbefehl und eine Funkressourcensteuerung RRC oder eine zugangsgesperrte Schicht NAS enthalten, wobei der besagte Austausch der besagten Nachrichten das Kombinieren eines unverschlüsselten RLC-Headers, eines unverschlüsselten RLC-Steuerrahmens, welcher in dem RRC-Sicherheitsmodusbefehl transportierte Sicherheitsparameter transportiert, mit einer nachfolgenden verschlüsselten RRC-Signalisierungsnachricht in einer RLC SDU umfasst.

6. UTRAN nach Anspruch 4 oder 5 für ein System, welches den Long Term Evolution bzw. LTE-Standard verwendet.

7. Verfahren für den Austausch von Nachrichten in einem UMTS-System gemäß Anspruch 1 oder 3 oder in einer UTRAN-Vorrichtung nach Anspruch 4 oder 6, umfassend die folgenden Schritte an einem Sender innerhalb des RLC:
- Bereitstellen des RRC-Sicherheitsmodusbefehls und der anschließenden Signalisierungsnachricht an den RLC,
- wobei der RLC den RRC-Sicherheitsmodusbefehl nicht verschlüsselt, jedoch immer noch die nachfolgende Signalisierungsnachricht chiffriert,
- Kombinieren eines unverschlüsselten RLC-Headers, eines unverschlüsselten RRC-Sicherheitsmodusbefehls mit einer nachfolgenden verschlüsselten RRC-Signalisierungsnachricht in einer RLC PDU.

8. Verfahren für den Austausch von Nachrichten in einem UMTS-System gemäß Anspruch 2 oder 3 oder in einer UTRAN-Vorrichtung nach Anspruch 5 oder 6, umfassend die folgenden Schritte an einem Sender innerhalb des RLC:
- Bereitstellen des RRC-Sicherheitsmodusbefehls und der anschließenden Signalisierungsnachricht an den RLC,
- wobei der RLC den RRC-Sicherheitsmodusbefehl nicht verschlüsselt, jedoch immer noch die nachfolgende Signalisierungsnachricht chiffriert,
- Kombinieren eines unverschlüsselten RLC-Headers, eines unverschlüsselten RLC-Steuerrahmens, welcher in einem RRC-Sicherheitsmodusbefehl transportierte Sicherheitsparameter transportiert, mit einer nachfolgenden verschlüsselten RRC-Signalisierungsnachricht in einer RLC PDU.

9. Verfahren nach Anspruch 7 oder 8, den folgenden Schritt umfassend:
- Versorgen einer Verschlüsselungsfunktion (714), welche an einer zweiten RLC-SDU (708) angewendet wird, mit einer ersten und einer zweiten SDU (704, 708) und einem RLC-Header (710) mit einem Zeiger (716), der das Byte, ab welchem die Verschlüsselung beginnen soll, identifiziert.

10. Verfahren nach Anspruch 7 oder 8, den folgenden Schritt umfassend:
- Versorgen einer Verschlüsselungsfunktion (714) nur mit derjenigen RRC-Nachricht, die verschlüsselt werden soll, und anschließendes Zusammenfügen der kompletten RLC PDU.

11. Verfahren nach einem beliebigen der Ansprüche 7 bis 10, den folgenden Schritt umfassend:
- Bereitstellen, in dem RLC-Header, einer Information darüber, dass die RLC PDU unverschlüsselte SDUs enthält, welche am Empfangsende zuerst verarbeitet werden müssen.

## Revendications

1. Système UMTS, adapté pour l'échange de messages entre un équipement utilisateur UE (120), un UTRAN (130) et un coeur de réseau (138), lesdits messages contenant une commande de mode de sécurité et une commande de ressources radio RRC ou des messages de signalisation de strate de non-accès NAS, ledit échange desdits messages comprenant la combinaison dans une PDU RLC d'un en-tête RLC non chiffré, d'une commande de mode de sécurité RRC non chiffrée avec un message de signalisation RRC chiffré suivant.

2. Système UMTS, adapté pour l'échange de messages entre un équipement utilisateur UE (120), un UTRAN (130) et un coeur de réseau (138), lesdits messages contenant une commande de mode de sécurité et une commande de ressources radio RRC ou des messages de signalisation de strate de non-accès NAS, ledit échange desdits messages comprenant la combinaison dans une PDU RLC d'un en-tête RLC non chiffré, d'une trame de commande RLC non chiffrée contenant des paramètres de sécurité contenus dans une commande de mode de sécurité RRC avec un message de signalisation RRC chiffré suivant.

3. Système UMTS selon la revendication 1 ou 2, pour un système utilisant une norme d'évolution à long terme LTE.

4. Réseau d'accès radio terrestre UMTS UTRAN (130), adapté pour l'échange de messages avec un équipement utilisateur UE (120) dans un système de communication sans fil, lesdits messages contenant une commande de mode de sécurité et une commande de ressources radio RRC ou des messages de signalisation de strate de non-accès NAS, ledit échange desdits messages comprenant la combinaison dans une PDU RLC d'un en-tête RLC non chiffré, d'une commande de mode de sécurité RRC non chiffrée avec un message de signalisation RRC chiffré suivant.

5. Réseau d'accès radio terrestre UMTS UTRAN (130), adapté pour l'échange de messages avec un équipement utilisateur UE (120) dans un système de communication sans fil, lesdits messages contenant une commande de mode de sécurité et une commande de ressources radio RRC ou des messages de signalisation de strate de non-accès NAS, ledit échange desdits messages comprenant la combinaison dans une PDU RLC d'un en-tête RLC non chiffré, d'une trame de commande RLC non chiffrée contenant des paramètres de sécurité contenus dans la commande de mode de sécurité RRC avec un message de signalisation RRC chiffré suivant.

6. UTRAN selon la revendication 4 ou 5, pour un système utilisant la norme d'évolution à long terme LTE.

7. Procédé pour l'échange de messages dans un système UMTS selon la revendication 1 ou 3 ou dans un équipement UTRAN selon la revendication 4 ou 6, comprenant les étapes suivantes, au niveau d'un émetteur dans une RLC :
- fournir la RLC avec la commande de mode de sécurité RRC et le message de signalisation suivant,
- la RLC ne chiffrant pas la commande de mode de sécurité RRC, mais cryptant le message de signalisation suivant,
- combiner dans une PDU RLC un en-tête RLC non chiffré, une commande de mode de sécurité RRC non chiffré avec un message de signalisation RRC chiffré suivant.

8. Procédé pour l'échange de messages dans un système UMTS selon la revendication 2 ou 3 ou dans un équipement UTRAN selon la revendication 5 ou 6, comprenant les étapes suivantes, au niveau d'un émetteur dans une RLC :
- fournir la RLC avec la commande de mode de sécurité RRC et le message de signalisation suivant,
- la RLC ne chiffrant pas la commande de mode de sécurité RRC, mais cryptant le message de signalisation suivant,
- combiner dans une PDU RLC un en-tête RLC non chiffré, une trame de commande RLC non chiffrée contenant des paramètres de sécurité contenus dans une commande de mode de sécurité RRC avec un message de signalisation RRC chiffré suivant.

9. Procédé selon la revendication 7 ou 8, comprenant l'étape suivante :
- fournir une fonction de chiffrement (714) qui est appliquée à une deuxième SDU RLC (708) avec une première et une deuxième SDU RLC (704, 708) et un en-tête RLC (710) avec un pointeur (716) identifiant l'octet à partir duquel le chiffrement doit commencer.

10. Procédé selon la revendication 7 ou 8, comprenant l'étape suivante :
- fournir seulement une fonction de chiffrement (714) avec le message RRC qui doit être chiffré puis rassembler la PDU RLC complète.

11. Procédé selon l'une quelconque des revendications 7 à 10, comprenant l'étape suivante :
- fournir, dans l'en-tête RLC, des informations selon lesquelles la PDU RLC contient des SDU non chiffrées qui doivent être traitées en premier à l'extrémité de réception.
